# EUROPÄISCHE PATENTSCHRIFT

(11) **EP 3 312 483 B1**
(45) Veröffentlichungstag und Bekanntmachung des Hinweises auf die Patenterteilung: **04.12.2019**
(21) Anmeldenummer: 17195105.6
(22) Anmeldetag: 06.10.2017
(51) Int. Cl.: F16K 31/06, F15B 13/04, F16H 61/02, G05D 16/20

(54) **ELEKTROMAGNETISCHES DRUCKREGELVENTIL**
ELECTROMAGNETIC PRESSURE REGULATOR
SOUPAPE DE RÉGLAGE DE PRESSION ÉLECTROMAGNÉTIQUE

(30) Priorität: 21.10.2016 DE 102016120118
(43) Veröffentlichungstag der Anmeldung: 25.04.2018
(73) Patentinhaber: ECO Holding 1 GmbH, 97828 Marktheidenfeld (DE)
(72) Erfinder: Franz, Bernd, 70567 Stuttgart (DE); Eisenberger, Andreas, 72622 Nürtingen (DE)

(56) Entgegenhaltungen:
- DE-A1- 10 241 449
- DE-A1- 19 904 902

## Beschreibung

Die Erfindung betrifft ein elektromagnetisches Druckregelventil nach dem Oberbegriff des Patentanspruchs 1.

Elektromagnetische Druckregelventile sind bekannt. Sie dienen bspw. der hydraulischen Steuerung einer Kupplung für ein Automatikgetriebe eines Kraftfahrzeugs. Die Druckregelventile weisen in einem Reglergehäuse einen axial bewegbaren Kolben auf, welcher zum Öffnen und/oder Schließen von Anschlüssen vorgesehen ist. Der Kolben wird mit Hilfe eines elektromagnetischen Stellers axial bewegt. Zur Herbeiführung einer Anpassung einer Stellkraft des elektromagnetischen Stellers weist das Druckregelventil an einem vom elektromagnetischen Steller abgewandt ausgebildeten Kolbenende ein Stift, auch als Nadel bezeichnet, auf, der in einer Aufnahmeöffnung des Kolbens aufgenommen ist. Der Stift liegt an einer dem Kolbenende gegenüberliegenden Wandung des Reglergehäuses, welche als Anschlag des Stiftes ausgebildet ist, an und bei einer Bewegung des Kolbens ergibt sich eine Relativbewegung zwischen dem Kolben und dem Stift. Ein demgemäß ausgebildetes elektromagnetisches Druckregelventil kann den beiden Offenlegungsschriften DE 102 41 449 A1 und EP 1 762 765 A2 entnommen werden.

Aus der DE 102 41 449 A1 ist ein gattungsgemäßes elektromagnetisches Druckregelventil bekannt, welches zur Endlagendämpfung des Kolbens und damit des im Kolben angeordneten Stiftes eine Drosselbohrung im Reglergehäuse aufweist.

Durch die axiale Bewegung des Kolbens verändert sich ein zwischen dem Stift und der Aufnahmeöffnung ausgebildetes Volumen, wodurch eine Dämpfung der Kolbenbewegung, da das Volumen zumindest teilweise mit Hydraulikfluid befüllt ist, herbeigeführt werden kann. Somit kann ein Kräftegleichgewicht am Kolben ausgebildet werden. Allerdings gibt es Belastungszustände im Betrieb des Druckreglers, bspw. Druckschwingungen in den Anschlüssen, die bei einer Magnetbestromung und der dann erfolgenden Bewegung des Kolbens zu einem Abheben des Stiftes von der Wandung führen. Problematisch ist, dass der Stift eine starke Beschleunigung erfährt und gegen die Wandung schlägt. Dies wiederum führt neben einer Beschädigung der Wandung durch bspw. Bruch, bei einer im Reglergehäuse eingesetzten Wandung zu einem Herausschlagen derselben und damit zu einem Versagen des Druckregelventils.

Somit ist es die Aufgabe der vorliegenden Erfindung ein verbessertes elektromagnetisches Druckregelventil bereitzustellen, in dessen Betrieb die vorstehend genannten Nachteile eliminiert sind.

Die Aufgabe wird erfindungsgemäß durch ein Druckregelventil mit den Merkmalen des Patentanspruchs 1 gelöst. Vorteilhafte Ausgestaltungen mit zweckmäßigen und nicht-trivialen Weiterbildungen der Erfindung sind in den jeweiligen Unteransprüchen angegeben.

Ein erfindungsgemäßes elektromagnetisches Druckregelventil weist einen elektromagnetischen Steller zur Positionierung eines in einem Reglergehäuse axial verschiebbar aufgenommenen Kolbens auf. Mit Hilfe des Kolbens sind Anschlüsse des Druckregelventils durchströmbar zu Öffnen und/oder zu Schließen. Der Kolben weist an seiner vom elektromagnetischen Steller abgewandt ausgebildeten Stirnfläche einen Stift auf, wobei zwischen dem Stift und dem Kolben eine relative Bewegung ausbildbar ist. Eine im Reglergehäuse vom Kolben abgewandt ausgebildeten Stiftstirnfläche ist einem Anschlag gegenüberliegend angeordnet. Zur Dämpfung einer Bewegung des Stiftes in Richtung des Anschlags umfasst das Druckregelventil eine hydraulische Endlagendämpfung. Die hydraulische Endlagendämpfung zeichnet sich dadurch aus, dass der Stift an seinem vom Kolben abgewandt ausgebildeten Ende hydraulisch gelagert ist. Die hydraulische Lagerung ist derart ausgebildet, dass mit Hilfe von zwischen der dem Anschlag zugewandt ausgebildeten Stiftstirnfläche und dem Anschlag vorliegendem Hydraulikfluid eine Kraft ausgebildet wird, die der Bewegung des Stiftes entgegenwirkt und ihn dadurch bremst, bzw. mit anderen Worten die Bewegung des Stiftes dämpft. Aufgrund der gedämpften Bewegung des Stiftes wird ein Auftreffen auf den Anschlag gemindert und somit werden Beschädigungen desselben verhindert. Damit ist ein verbessertes elektromagnetisches Druckregelventil mit einer verlängerten Lebensdauer ausgebildet.

Erfindungsgemäß weist die hydraulische Endlagendämpfung ein den Stift aufnehmendes Abschlusselement auf. Mit Hilfe des Abschlusselementes ist ein Aufnahmeraum bereitgestellt, welcher mit Hydraulikfluid befüllbar ist und in das der Stift eintauchen kann. Bevorzugt ist der Aufnahmeraum in Form einer Sacklochbohrung ausgebildet, so dass aufgrund einer Kegelspitze der Sacklochbohrung ein dämpfendes Hydraulikvolumen im Aufnahmeraum ausgebildet ist und der Stift nur über eine sehr kleine Ringfläche seiner Stiftstirnfläche mit dem Abschlusselement in Kontakt kommen kann. Durch ein Auftreffen und das Eintauchen des Stiftes in die mit Hydraulikfluid gefüllte Sacklochbohrung des Abschlusselements wird die Beschleunigung des Stiftes hydraulisch so stark gedämpft, dass es zu keinen Schädigungen am Abschlusselement kommt.

Zur weiteren verbesserten Dämpfung umfasst die hydraulische Endlagendämpfung eine Entlastungsöffnung. Mit Hilfe der Entlastungsöffnung ist eine dauerhafte Befüllung des zwischen dem Kolben und dem Abschlusselement ausgebildeten Volumens zur gesicherten Dämpfung sichergestellt.

In einer kostengünstig herstellbaren Ausgestaltung ist die Entlastungsöffnung am Reglergehäuse ausgebildet.

In einer weiteren Ausgestaltung des erfindungsgemäßen Druckregelventils ist zwischen dem Abschlusselement und der Stirnfläche ein veränderbares Volumen ausgebildet, welches mit der Entlastungsöffnung durchströmbar ausgeführt ist, so dass die Ausbildung des dämpfenden Hydraulikvolumens gesichert ist.

In einer weiteren Ausgestaltung weist das Abschlusselement eine Dämpfungsöffnung auf. Mit Hilfe der Dämpfungsöffnung ist ein weiteres Stellglied zur Einstellung der Dämpfung realisiert, derart, dass die herbeizuführende Dämpfung entsprechenden Einsatzbedingungen des elektromagnetischen Druckregelventils anpassbar ist.

Die Entlastungsöffnung ist in Abhängigkeit einer Einbaulage des elektromagnetischen Druckregelventils positioniert. Der Vorteil dieser Ausgestaltung ist, dass die Entlastungsöffnung des elektromagnetischen Druckregelventils nicht zwingend an einer konstanten Stelle am Druckregelventil ausgebildet sein muss. Es besteht lediglich das Erfordernis die Entlastungsöffnung so anzubringen, dass eine gesicherte Befüllung des zwischen dem Kolben und dem Abschlusselement ausgebildeten veränderbaren Volumens realisiert ist. Somit kann der vorgegebenen Einbaulage und einem möglichen Bauraum Rechnung getragen werden.

In einer weiteren Ausgestaltung ist zwischen dem Stift und dem Abschlusselement ein definiertes Spiel ausgebildet. Der Vorteil des definierten Spiels ist darin zu sehen, dass mit Hilfe des definierten Spiels ein Stellglied zur Einstellung der Dämpfung herbeigeführt ist. Das Spiel ist in Abhängigkeit des Einsatzgebietes des elektromagnetischen Druckregelventils und den Erfordernissen eines Ansprechverhaltens des zu beaufschlagenden Aggregates zu dimensionieren.

Ein weiteres Stellglied zur Einstellung der Dämpfung ist eine in das Abschlusselement definierte Eindringtiefe des Stiftes. Auch die definierte Eindringtiefe ist in Abhängigkeit des Einsatzgebietes des elektromagnetischen Druckregelventils und den Erfordernissen des Ansprechverhaltens des zu beaufschlagenden Aggregates zu dimensionieren.

Eine weiter verbesserte Dämpfungswirkung der hydraulischen Endlagendämpfung ist durch das Abschlusselement erreicht, welches an seiner den Stift aufnehmenden Aufnahmeöffnung eine Fase aufweist. Die Fase dient einem verbesserten und schnellen Eindringungen des Hydraulikfluids in die Aufnahmeöffnung des Abschlusselementes sowie einem Schutz der Aufnahmeöffnung vor einem Eindringen bzw. Einziehen von Partikel, sodass ein Verklemmen des Stiftes durch die Partikel vermieden wird. Ein Öffnungswinkel der Fase mit einem Wert von 120° hat sich als besonders effektiv herausgestellt.

Mit Hilfe einer Fase am Außenumfang einer Absatzfläche des Abschlusselementes ist das Abschlusselement für eine vereinfachte Montage ausgebildet. Die Fase verhilft einer erleichterten Einführung des Abschlusselementes in das Reglergehäuse.

In einer weiteren Ausgestaltung des erfindungsgemäßen elektromagnetischen Druckregelventils ist das Abschlusselement mit Hilfe von mindestens einem Klemmelement am Reglergehäuse gesichert.

Zur bevorzugten Sicherung des Abschlusselementes am Reglergehäuse mit Hilfe des Klemmelementes ist eine vom Kolben abgewandt ausgebildete Elementstirnfläche abgerundet ausgebildet. Der Vorteil ist ein vereinfachtes Eingreifen des Klemmelementes im Abschlusselement, insbesondere sofern das Abschlusselement an der vom Kolben abgewandt ausgebildete Elementstirnfläche eine Aufnahmeöffnung aufweist.

Ein weiterer Vorteil der hydraulischen Entlagendämpfung ist die ausschließliche Wirkung derselben bei Druckerhöhung. Das heißt mit anderen Worten, dass ein Abschaltverhalten des Ventils nicht beeinflusst wird. Die vorliegende Erfindung verhindert neben dem harten Aufschlagen auch ein Abheben des Stiftes, da der Bewegungsimpuls in beide Richtungen gedämpft wird. Effekte durch dynamische Störungen und Druckschwingungsüberlagungen werden somit effektiv in beide Richtungen eliminiert. Somit wird die Ursache eines Ausfalls des elektromagnetischen Druckregelventils schon im Ansatz verhindert. Kommt es dennoch zu einem Abheben des Stiftes vom Anschlag, erfolgt ein darauffolgendes Auftreffen unter stark gedämpfter Geschwindigkeit des Stiftes und bleibt somit ohne schädigende Auswirkung auf das Druckregelventil.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Gleichen oder funktionsgleichen Elementen sind identische Bezugszeichen zugeordnet. Aus Gründen der Übersichtlichkeit ist es möglich, dass die Elemente nicht in allen Figuren mit ihrem Bezugszeichen versehen sind, ohne jedoch ihre Zuordnung zu verlieren. Es zeigen:
Fig. 1 in einem Längsschnitt ein erfindungsgemäßes elektromagnetisches Druckregelventil in einer ersten Position,
Fig. 2 in einem Längsschnitt das Druckregelventil gem. Fig. 1 in einer zweiten Position,
Fig. 3 in einer vergrößerten Darstellung einen Ausschnitt des Druckregelventils gem. Fig. 2, und
Fig. 4 in einem Längsschnitt ein Abschlusselement des erfindungsgemäßen Druckregelventils.

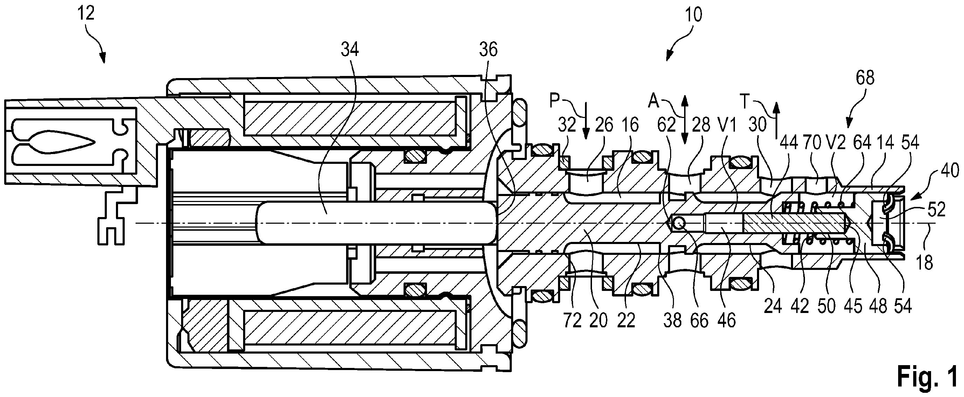

Ein erfindungsgemäßes elektromagnetisches Druckregelventil 10 für eine nicht näher dargestellte Kupplung eines Automatikgetriebes eines nicht näher dargestellten Kraftfahrzeugs ist gemäß Fig. 1 ausgebildet. Das Druckregelventil 10 ist in Fig. 1 in einer ersten Position dargestellt, welche sich durch eine Nichtbestromung eines elektromagnetischen Stellers 12 des Druckregelventils 10 auszeichnet.

Das Druckregelventil 10 weist ein Reglergehäuse 14 auf, welches zur Anbindung an hydraulische Anschlüsse, einem Versorgungsanschluss P, einem Verbraucheranschluss A und einem Tankanschluss T, ausgestaltet ist. In einer im Reglergehäuse 14 ausgebildeten ersten Aufnahmeöffnung 16 ist ein entlang einer Längsachse 18 des Reglergehäuses 14 axial verschiebbarer Kolben 20 bewegbar aufgenommen. Das Reglergehäuse 14 ist rotationssymmetrisch bezüglich der Längsachse 18 ausgestaltet.

Der Kolben 20 ist zur regelbaren Durchströmung der hydraulischen Anschlüsse P, A, T ausgestaltet. Er weist zwei über seinem Umfang ausgebildete Steuernuten auf, eine erste Steuernut 22 und eine zweite Steuernut 24. Die erste Steuernut 22 ist zur Herstellung einer durchströmbaren Verbindung zwischen dem Versorgungsanschluss P und dem Verbraucheranschluss A ausgebildet. Die zweite Steuernut 24 dient der Herstellung einer durchströmbaren Verbindung zwischen dem Verbraucheranschluss A und dem Tankanschluss T.

Zur Bereitstellung der durchströmbaren Verbindungen weist das Reglergehäuse 14 entlang der Längsachse 18 seriell angeordnete, das Reglergehäuse 14 vollständig durchdringende Durchströmöffnungen auf, wobei eine erste Durchströmöffnung 26 dem Versorgungsanschluss P, eine zweite Durchströmöffnung 28 dem Verbraucheranschluss A und eine dritte Durchströmöffnung 30 dem Tankanschluss T zugeordnet ist. In der ersten Durchströmöffnung 26 ist ein Filtersieb 32 aufgenommen, welches dem Filtern eines das Druckregelventil 10 durchströmenden Hydraulikfluids dient, das über den Versorgungsanschluss P dem Druckregelventil 10 zugeführt wird.

Zur Positionierung des Kolbens 20 ist der elektromagnetische Steller 12 mit einem axial bewegbaren Stempel 34 ausgestaltet, der entsprechend einer Bestromung des elektromagnetischen Stellers 12 seine axiale Position einnimmt. Fig. 1 zeigt den elektromagnetischen Steller 12 im unbestromten Zustand und der Stempel 34 befindet sich in einer Ruheposition. An seinem dem Kolben 20 zugewandt ausgebildeten Stempelende 36 steht er mit dem Kolben 20, diesen berührend, in Verbindung. Somit führt der Kolben 20 bei einer Bewegung des Stempels 34 ebenfalls eine axiale Bewegung aus.

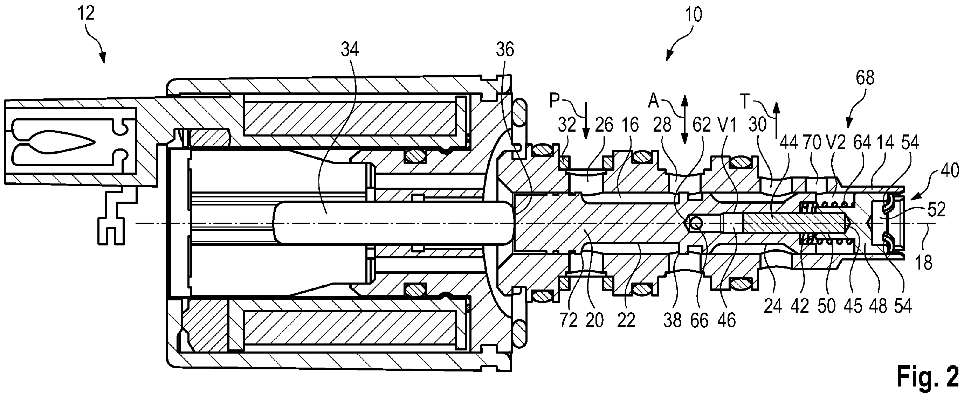

In Fig. 2 ist das Druckregelventil 10 in einer zweiten Position dargestellt, in der eine Beaufschlagung des Verbraucheranschlusses A mit Hydraulikfluid aus dem Versorgungsanschluss P erfolgt. Der Kolben 20 ist mit Hilfe des Stempels 34 so positioniert, dass die erste Steuernut 22 die erste Durchströmöffnung 26 und die zweite Durchströmöffnung 28 freigibt. Eine erste Steuerkante 38 der ersten Steuernut 22, welche der zweiten Durchströmöffnung 28 zugewandt ausgebildet ist, ist soweit axial in Richtung eines vom elektromagnetischen Steller 12 abgewandt ausgebildeten Gehäuseendes 40 verschoben, dass eine Durchströmung der zweiten Durchströmöffnung 28 erfolgen kann, da eine der ersten Steuerkante 38 gegenüberliegende zweite Steuerkante 72 der ersten Steuernut 22 die erste Durchströmung 26 freigebend positioniert ist.

Der Kolben 20 weist an seiner dem Gehäuseende 40 zugewandten Stirnfläche 42 einen zylinderförmigen Stift 44 auf, der in einer im Kolben 20 ausgebildeten zweiten Aufnahmeöffnung 46 aufgenommen ist. Der Stift 44 ist in der zweiten Aufnahmeöffnung 46 relativ zum Kolben 20 in diesem bewegbar und ist koaxial mit dem Kolben 20 in der zweiten Aufnahmeöffnung 46 positioniert.

Der Stift 44 ist durch einen seiner Stiftstirnfläche 45 gegenüberliegend ausgestalteten Anschlag 48 in seiner Bewegung in eine vom Kolben 20 abgewandt ausgebildete axiale Richtung begrenzt.

Zwischen der zweiten Aufnahmeöffnung 46 und dem Stift 44 ist ein veränderbares erstes Volumen V1 ausbildbar, welches einer Dämpfung der Kolbenbewegung dient. Zur Versorgung des ersten Volumens V1 mit Hydraulikfluid, weist der Kolben 20 an einem dem Stift 44 gegenüberliegenden Endbereich 62 der zweiten Aufnahmeöffnung 46 Zulaufsöffnungen 66 auf. Die Zulaufsöffnungen 66 sind so im Kolben 20 ausgebildet, dass eine Ver- und Entsorgung des ersten Volumens V1 mit Hydraulikfluid über den Verbraucheranschluss A herbeiführbar ist. Insgesamt sind über einem Umfang des Kolbens 20 zwei Zulaufsöffnungen 66 regelmäßig angeordnet.

Der Stift 44 stützt sich an einem als Anschlag ausgebildeten Abschlusselement 48 ab, wobei er in einer dem Abschlusselement 48 zugeordneten dritten Aufnahmeöffnung 50, welche koaxial mit der Längsachse 18 ausgebildet ist, eingreifend ausgestaltet ist. Das Abschlusselement 48 dient neben der Aufnahme des Stiftes 44 einem dichtenden Abschluss des Druckregelventils 10. Das heißt mit anderen Worten, dass das Abschlusselement 48 als dichtender Deckel des Reglergehäuses 14 zur Abdeckung der ersten Aufnahmeöffnung 16 ausgestaltet ist.

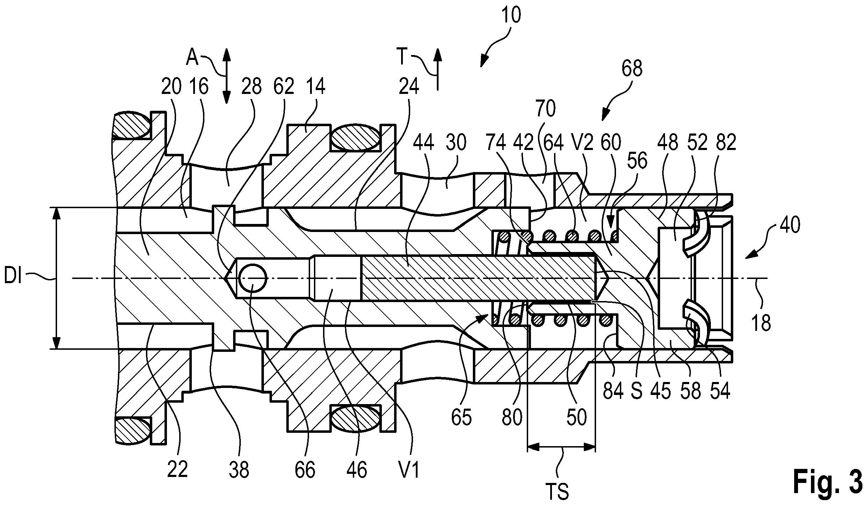

Fig. 3 zeigt zur verbesserten Erläuterung in einer vergrößerten Darstellung einen Ausschnitt des Druckregelventils 10.

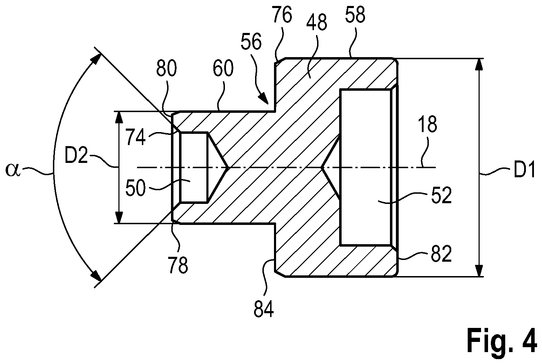

Das rotationssymmetrisch ausgebildete Abschlusselement 48 ist in einem Längsschnitt in Fig. 4 dargestellt. Von der dritten Aufnahmeöffnung 50, welche an einer ersten Elementstirnfläche 80 des Abschlusselementes 48 ausgebildet ist, weist das Abschlusselement 48 an seiner von der ersten Elementstirnfläche 80 abgewandt ausgebildeten zweiten Elementstirnfläche 82 eine vierte Aufnahmeöffnung 52 auf.

Ein erster Durchmesser D1 des Abschlusselementes 48 entspricht einem Innendurchmesser DI des Reglergehäuses 14, welcher einem Durchmesser der ersten Aufnahmeöffnung 16 entspricht, wobei der erste Durchmesser D1 bevorzugt zur Presspassung zwischen dem Abschlusselement 48 und dem Reglergehäuse 14 ausgestaltet ist. Eine zusätzliche Sicherung gegen ein Lösen des Abschlusselementes 48 ist in Form von Klemmelementen 54 ausgestaltet, die ausgehend vom Reglergehäuse 14 in die vierte Aufnahmeöffnung 52 eingreifend ausgeführt sind.

Das Abschlusselement 48 besitzt einen Absatz 56, welcher zwischen einem dichtenden ersten Elementteil 58 des Abschlusselementes 48 mit dem ersten Durchmesser D1 und einem volumenbildenden zweiten Teil 60 des Abschlusselementes 48 mit einem zweiten Durchmesser D2 ausgebildet ist. Der zweite Durchmesser D2 ist kleiner als der erste Durchmesser D1, so dass ein zweites Volumen V2 zwischen dem zweiten Elementteil 60, dem Kolben 20 und dem Reglergehäuse 14 ausgebildet ist. Zur kontrollierten Bewegung des Kolbens 20 bei einer Verschiebung desselben ist zwischen dem Kolben 20 und dem Abschlusselement 48 ein Vorspannelement 64 angeordnet, welches in diesem Ausführungsbeispiel in Form einer Spiralfeder ausgeführt ist.

Das Vorspannelement 64 stützt sich einenends am Absatz 56 an einer ringförmigen Absatzfläche 84 des ersten Elementteils 58 und anderenends am Kolben 20 ab. Zur gesicherten Positionierung ist das Vorspannelement 64 anderenends in der zweiten Aufnahmeöffnung 46 aufgenommen, wobei es sich dort an einem weiteren Absatz 65, welcher im Kolben 20 ausgebildet ist, anliegend abstützt.

Der weitere Absatz 65 dient neben einer Abstützung des Vorspannelementes 64 einer Begrenzung der axialen Kolbenbewegung, da das zweite Elementteil 60 in die zweite Aufnahmeöffnung 46 hineinragend und an dem weiteren Absatz 65 anschlagbar ausgebildet ist.

Das Druckregelventil 10 weist eine hydraulische Endlagendämpfung 68 auf. Die hydraulische Endlagendämpfung 68 bewirkt eine gedämpfte oder sogar aufgehobene Beschleunigung des Stiftes 44 in bestimmten Belastungssituationen.

Die hydraulische Endlagendämpfung 68 umfasst zusätzlich, neben dem Abschlusselement 48 und der mit Hilfe des Abschlusselementes 48 ausgebildete Aufnahme des Stiftes 44 in der zweiten Aufnahmeöffnung 46, eine Entlastungsöffnung 70, die im dargestellten Ausführungsbeispiel im Reglergehäuse 14 neben dem Tankanschluss T als durchströmbare Bohrung ausgeführt ist. Die Entlastungsöffnung 70 stellt eine durchströmbare Verbindung zwischen dem zweiten Volumen V2 und dem Tankanschluss T her.

Die Entlastungsöffnung 70 ist so am Druckregelventil 10 auszubilden, dass das zweite Volumen V2 vollständig mit Hydraulikfluid befüllt ist. Im dargestellten Ausführungsbeispiel entspricht die dargestellte waagrechte Lage des Druckregelventils 10 seiner Einbaulage. Somit ist zur gesicherten Befüllung des zweiten Volumens V2 die Entlastungsöffnung 70 über dem Stift 44 und dem Abschlusselement 48 liegend in einem Winkel von 90° zur Längsachse 18 angeordnet.

In einem nicht näher dargestellten Ausführungsbeispiel ist zur unabhängigen Positionierung der Entlastungsöffnung 70 diese mit einer weiteren Anbindung an den Tankanschluss T durchströmbar verbunden. Das heißt mit anderen Worten, dass die Montage des Druckregelventils 10 unabhängig von einer lageorientierten Ausrichtung der Entlastungsöffnung 70 möglich ist, bei gleichzeitiger Sicherung der vollständigen Befüllung des zweiten Volumen V2.

Zur verbesserten Einführung des Stiftes 44 in die dritte Aufnahmeöffnung 50 weist das zweite Elementteil 60 an seinem dem Kolben 20 zugewandt ausgebildeten Ende eine von Innen nach Außen geöffnete Fase 74 auf, wobei ein Öffnungswinkel α der Fase 74 bevorzugt einen Wert von 120° aufweist. Des Weiteren dient diese Fase 74 einer verbesserten und schnelleren Befüllung der dritten Aufnahmeöffnung 50 und damit des zwischen dem Stift 44 und dem Abschlusselement 48 ausgebildeten Aufnahmeraumes, der zur hydraulischen Dämpfung des Stiftes 44 kontinuierlich mit Hydraulikfluid zu befüllen ist.

Eine zusätzliche Fase 78 ist am Außenumfang des zweiten Elementteils 60 an seinem dem Kolben 20 zugewandt ausgebildeten Ende vorgesehen.

Das Abschlusselement 48 besitzt zur schnellen Montage am Außenumfang der Absatzfläche 84 eine weitere Fase 76, so dass eine vereinfachte Einführung des Abschlusselementes 48 erfolgen kann. Die zweite Elementstirnfläche 82 ist zur einfachen und sicheren Aufnahme der Klemmelemente 54 in deren Richtung gebogen ausgeführt.

Die beiden Aufnahmeöffnungen 50, 52 des Abschlusselementes 48 sind kostengünstig als Bohrung, insbesondere als Sacklochbohrungen ausgebildet, ebenso die zweite Aufnahmeöffnung 46.

Als ein so genanntes Stellglied der Regelung der Dämpfung ist neben einer definierten Eindringtiefe TS des Stiftes 44 in die dritte Aufnahmeöffnung 50 ein zwischen dem Stift 44 und dem zweiten Elementteil 60 ausgebildetes definiertes Spiel S anzusehen. Das heißt mit anderen Worten, dass entsprechend der Dimensionierung der Eindringtiefe TS und/oder des Spiels S die Dämpfung eingestellt werden kann. Je nach Anforderung und/oder Einsatzgebiet des elektromagnetischen Druckregelventils 10 kann die Dämpfung über die Eindringtiefe TS und/oder über das Spiel S eingestellt werden.

In einem weiteren, nicht näher dargestellten Ausführungsbeispiel weist das elektromagnetische Druckregelventil 10 ausgehend von der dritten Aufnahmeöffnung 50 eine das Abschlusselement 48 durchströmbare Dämpfungsöffnung auf. Die Dämpfungsöffnung dient als weiteres Stellglied der Regelung der Dämpfung.

## Patentansprüche

1. Elektromagnetisches Druckregelventil, aufweisend einen elektromagnetischen Steller (12) zur Positionierung eines in einem Reglergehäuse (14) axial verschiebbar aufgenommenen Kolbens (20), wobei mit Hilfe des Kolbens (20) Anschlüsse (P, A, T) des Druckregelventils (10) durchströmbar zu Öffnen und/oder zu Schließen sind, und wobei der Kolben (20) an seiner vom elektromagnetischen Steller (12) abgewandt ausgebildeten Stirnfläche (42) einen Stift (44) aufweist, wobei zwischen dem Stift (44) und dem Kolben (20) eine relative Bewegung ausbildbar ist, und wobei eine im Reglergehäuse (14) vom Kolben (20) abgewandt ausgebildete Stiftstirnfläche (45) einem als Anschlag ausgebildeten Abschlusselement (48) gegenüberliegend angeordnet ist,
wobei zur Dämpfung einer Bewegung des Stiftes (44) in Richtung des als Anschlag ausgebildeten Abschlusselementes (48) das Druckregelventil (10) eine hydraulische Endlagendämpfung (68) umfasst, **dadurch gekennzeichnet, dass** die hydraulische Endlagendämpfung (68) das den Stift (44) aufnehmende Abschlusselement (48) aufweist.

2. Elektromagnetisches Druckregelventil nach Anspruch 1,
**dadurch gekennzeichnet, dass**
die hydraulische Endlagendämpfung (68) eine Entlastungsöffnung (70) umfasst.

3. Elektromagnetisches Druckregelventil nach Anspruch 2,
**dadurch gekennzeichnet, dass**
die Entlastungsöffnung (70) am Reglergehäuse (14) ausgebildet ist.

4. Elektromagnetisches Druckregelventil nach einem der Ansprüche 1 bis 3,
**dadurch gekennzeichnet, dass**
zwischen dem Abschlusselement (48) und der Stirnfläche (42) ein veränderbares Volumen (V2) ausgebildet ist.

5. Elektromagnetisches Druckregelventil nach einem der Ansprüche 1 bis 4,
**dadurch gekennzeichnet, dass**
das Abschlusselement (48) eine Dämpfungsöffnung aufweist.

6. Elektromagnetisches Druckregelventil nach einem der Ansprüche 1 bis 5,
**dadurch gekennzeichnet, dass**
die Entlastungsöffnung (70) in Abhängigkeit einer Einbaulage des elektromagnetischen Druckregelventils (10) positioniert ist.

7. Elektromagnetisches Druckregelventil nach einem der Ansprüche 1 bis 6,
**dadurch gekennzeichnet, dass**
zwischen dem Stift (44) und dem Abschlusselement (48) ein definiertes Spiel (S) ausgebildet ist.

8. Elektromagnetisches Druckregelventil nach einem der Ansprüche 1 bis 7,
**dadurch gekennzeichnet, dass**
der Stift (44) eine in das Abschlusselement (48) definierte Eindringtiefe (TS) aufweist.

9. Elektromagnetisches Druckregelventil nach einem der Ansprüche 1 bis 8,
**dadurch gekennzeichnet, dass**
das Abschlusselement (48) an seiner den Stift (44) aufnehmenden Aufnahmeöffnung (46) eine Fase (74) aufweist.

10. Elektromagnetisches Druckregelventil nach Anspruch 9,
**dadurch gekennzeichnet, dass**
die Fase (74) einen Öffnungswinkel (α) mit einem Wert von 120° aufweist.

11. Elektromagnetisches Druckregelventil nach einem der Ansprüche 1 bis 10,
**dadurch gekennzeichnet, dass**
das Abschlusselement (48) an seiner Absatzfläche (84) eine Fase (76) am Außenumfang aufweist.

12. Elektromagnetisches Druckregelventil nach einem der Ansprüche 1 bis 11,
**dadurch gekennzeichnet, dass**
das Abschlusselement (48) mit Hilfe von mindestens einem Klemmelement (54) am Reglergehäuse (14) gesichert ist.

13. Elektromagnetisches Druckregelventil nach Anspruch 12,
**dadurch gekennzeichnet, dass**
eine vom Kolben (20) abgewandt ausgebildete Elementstirnfläche (82) abgerundet ausgebildet ist.

## Claims

1. Electromagnetic pressure control valve, having an electromagnetic actuator (12) for positioning a piston (20) that is axially displaceably accommodated in a controller housing (14), flow through the ports (P, A, T) of the pressure control valve (10) for the purpose of opening and/or closing being possible with the aid of the piston (20), and the piston (20) having a pin (44) on its end face (42) formed so as to be facing away from the electromagnetic actuator (12), it being possible for a relative movement to be built up between the pin (44) and the piston (20), and a pin end face (45) formed so as to be facing away from the piston (20) in the controller housing (14) being arranged opposite a terminating element (48) formed as a stop, the pressure control valve (10) comprising hydraulic end position damping in order to damp a movement of the pin (44) in the direction of the terminating element (48) formed as a stop,
**characterized in that**
the hydraulic end position damping (68) has the terminating element (48) receiving the pin (44).

2. Electromagnetic pressure control valve according to Claim 1,
**characterized in that**
the hydraulic end position damping (68) comprises a relief opening (70).

3. Electromagnetic pressure control valve according to Claim 2,
**characterized in that**
the relief opening (70) is formed on the controller housing (14).

4. Electromagnetic pressure control valve according to one of Claims 1 to 3,
**characterized in that**
a variable volume (V2) is formed between the terminating element (48) and the end face (42).

5. Electromagnetic pressure control valve according to one of Claims 1 to 4,
**characterized in that**
the terminating element (48) has a damping opening.

6. Electromagnetic pressure control valve according to one of Claims 1 to 5,
**characterized in that**
the relief opening (70) is positioned depending on an installed position of the electromagnetic pressure control valve (10).

7. Electromagnetic pressure control valve according to one of Claims 1 to 6,
**characterized in that**
a defined clearance (S) is formed between the pin (44) and the terminating element (48).

8. Electromagnetic pressure control valve according to one of Claims 1 to 7,
**characterized in that**
the pin (44) has a defined penetration depth (TS) into the terminating element (48).

9. The electromagnetic pressure control valve according to one of Claims 1 to 8,
**characterized in that**
the terminating element (48) has a chamfer (74) on its receiving opening (46) receiving the pin (44).

10. Electromagnetic pressure control valve according to Claim 9,
**characterized in that**
the chamfer (74) has an opening angle (a) with a value of 120°.

11. Electromagnetic pressure control valve according to one of Claims 1 to 10,
**characterized in that**
the terminating element (48) has a chamfer (76) on the outer circumference on its shoulder surface (84) .

12. Electromagnetic pressure control valve according to one of Claims 1 to 11,
**characterized in that**
the terminating element (48) is secured to the controller housing (14) with the aid of at least one clamping element (54).

13. Electromagnetic pressure control valve according to Claim 12,
**characterized in that**
an element end face (82) formed so as to be facing away from the piston (20) is formed rounded.

## Revendications

1. Vanne de régulation de pression électromagnétique, comprenant un actionneur électromagnétique (12) destiné à positionner un piston (20) reçu de manière à pouvoir coulisser axialement dans un logement de régulateur (14), des raccords (P, A, T) de la vanne de régulation de pression (10) pouvant être ouverts et/ou fermés à l'aide du piston (20) de manière à pouvoir permettre un écoulement, et le piston (20) comportant une tige (44) sur sa face d'extrémité (42) opposée à l'actionneur électromagnétique (12), un mouvement relatif pouvant être formé entre la tige (44) et le piston (20), et une face d'extrémité de tige (45) opposée au piston (20) dans le boîtier de régulateur (14) étant disposée en regard d'un élément d'arrêt (48) conçu comme une butée, la vanne de régulation de pression (10) comprenant un amortissement de position finale hydraulique (68) destiné à amortir un mouvement de la tige (44) en direction de l'élément d'arrêt conçu comme une butée, **caractérisée en ce que** l'amortissement de position finale hydraulique (68) comprend l'élément d'arrêt (48) recevant la tige (44).

2. Vanne de régulation de pression électromagnétique selon la revendication 1, **caractérisée en ce que** l'amortissement de position finale hydraulique (68) comprend une ouverture de décharge (70).

3. Vanne de régulation de pression électromagnétique selon la revendication 2, **caractérisée en ce que** l'ouverture de décharge (70) est formée au niveau du boîtier de régulateur (14).

4. Vanne de régulation de pression électromagnétique selon l'une des revendications 1 à 3, **caractérisée en ce qu'**un volume variable (V2) est formé entre l'élément d'arrêt (48) et la face d'extrémité (42).

5. Vanne de régulation de pression électromagnétique selon l'une des revendications 1 à 4, **caractérisée en ce que**
l'élément d'arrêt (48) comporte une ouverture d'amortissement.

6. Vanne de régulation de pression électromagnétique selon l'une des revendications 1 à 5, **caractérisée en ce que**
l'ouverture de décharge (70) est positionnée en fonction d'une position d'installation de la soupape de régulation de pression électromagnétique (10).

7. Vanne de régulation de pression électromagnétique selon l'une des revendications 1 à 6, **caractérisée en ce que**
un jeu défini (S) est ménagé entre la tige (44) et l'élément d'arrêt (48).

8. Vanne de régulation de pression électromagnétique selon l'une des revendications 1 à 7, **caractérisée en ce que**
la tige (44) a une profondeur de pénétration (TS) définie dans l'élément d'arrêt (48).

9. Vanne de régulation de pression électromagnétique selon l'une des revendications 1 à 8, **caractérisée en ce que**
l'élément d'arrêt (48) comporte un chanfrein (74) au niveau de son ouverture de réception (46) recevant la tige (44).

10. Vanne de régulation de pression électromagnétique selon la revendication 9, **caractérisée en ce que** le chanfrein (74) a un angle d'ouverture (α) de 120°.

11. Vanne de régulation de pression électromagnétique selon l'une des revendications 1 à 10, **caractérisée en ce que**
l'élément d'arrêt (48) comporte sur sa surface d'épaulement (84) un chanfrein (76) situé sur la périphérie extérieure.

12. Vanne de régulation de pression électromagnétique selon l'une des revendications 1 à 11, **caractérisée en ce que**
l'élément d'arrêt (48) est fixé au boîtier de régulateur (14) au moyen d'au moins un élément de serrage (54).

13. Vanne de régulation de pression électromagnétique selon la revendication 12, **caractérisée en ce que** une face d'extrémité d'élément (82), opposée au piston (20), est arrondie.
